# EUROPEAN PATENT APPLICATION

(11) **EP 4 672 511 A1**
(43) Date of publication of application: **31.12.2025**
(21) Application number: 24184169.1
(22) Date of filing: 25.06.2024
(51) Int. Cl.: H01R 13/52, H01R 13/74, H02G 3/22

(54) **THROUGH-WALL MOUNTING CONNECTOR WITH LOCKING MEMBER**

(71) Applicant: Aptiv Technologies AG, 8200 Schaffhausen (CH)
(72) Inventor: DOBERNIG, Norbert, 8200 Schaffhausen (CH); SUKUMAR, Nithish, 8200 Schaffhausen (CH)
(74) Representative: INNOV-GROUP

(57) **Abstract**

Through-wall mounting connector adapted to be sealingly mounted through an opening in a support wall (2) against an inner face (3) of said support wall (2), comprising a locking member (11) which includes :
- an inner bearing surface (13) supporting a seal (14);
- a cross-member leg (15) projecting transversely from the inner bearing surface (13);
- a resilient cantilever arm (16) projecting transversely from the cross-member leg (15), and extending in a plane parallel to the inner bearing surface (13);
- an external locking notch (19) arranged on the resilient cantilever arm (16) and adapted to be positioned against said external face (12) of the support wall (2).

## Description

### TECHNICAL FIELD

The invention relates to the field of electrical connectors, and more particularly to through-wall connectors which are adapted to be sealingly mounted through a hole in a support wall, against an external face of said support wall, in order to make electrical connections through this support wall.

These through-wall connectors generally comprise an inner wiring portion, located on one side of the support wall, and an outer portion which is intended to project from an external face of the support wall and which is provided with a connection member (e.g. a male or female connection means).

Through-wall mounting connectors are thus rigidly and tightly fixed to a wall, and feature a protruding portion ready for connection.

Through-wall mounting connectors are commonly used in the automotive industry. For example, they enable electrical connections to be made to the inner components of a car door, by being mounted on the wall of the casing defining the door. The inner wiring portion of the connector is then located in the inner space of the door, and is connected to an electrical harness linking the inner components of the door, while the external portion of the through-wall mounting connector projects outside the door, and is connected to an electrical harness linking the door to the rest of the vehicle's electrical network.

In these applications, issues of mechanical strength, sealing, space constraints and reliability are crucial.

### PRIOR ART

Conventional through-wall mounting connectors are fitted with a locking system that enables the through-wall mounting connector to be clipped onto the supporting wall in a watertight manner. Because of the sealing requirement, integration of the locking system takes place in a critical area, and is therefore rather complex. The design of locking elements without undercuts is generally achieved by means of sliders in the die used to produce the connector. Such sliders are generally used to produce locking snaps, or tongue-shaped locking elements, which entail risks of water infiltration. In such cases, seals are generally over-molded onto the part, with the associated bulk.

The through-wall mounting connectors of the prior art thus take up a lot of space in terms of sealing and locking means, and can therefore be improved in terms of compactness and production cost (in particular by reducing the number of manufacturing steps and the quantity of material required). These are crucial factors in many industries, particularly the automotive sector.

### SUMMARY OF THE INVENTION

The purpose of the invention is to improve the through-wall mounting connectors of the prior art.

To this end, the invention relates to a through-wall mounting connector adapted to be sealingly mounted through an opening in a support wall against an inner face of said support wall, this through-wall mounting connector comprising an inner wiring portion and an external portion which is intended to project from an external face of the said support wall and which is provided with a connection member. This through-wall mounting connector comprises a locking member which includes :
- an inner bearing surface supporting a seal adapted to be positioned against said inner face of the support wall;
- a cross-member leg projecting transversely from the inner bearing surface towards the external portion;
- a resilient cantilever arm projecting transversely from the cross-member leg, and extending in a plane parallel to the inner bearing surface;
- an external locking notch arranged on the resilient cantilever arm and adapted to be positioned against said external face of the support wall, this external locking notch being arranged opposite the inner bearing surface, and being movable by means of elastic deformation of the resilient cantilever arm, in a direction substantially parallel to the inner bearing surface.

Through-wall mounting connectors according to the invention benefit from a compact inner layout and require less space to house the sealing and locking means, compared with prior art through-wall mounting connectors.

The invention also makes it possible to reduce the cost of manufacturing through-wall mounting connectors, by requiring seals with reduced profiles, without the need for overmolding operations, and by simplifying production operations.

Through-wall mounting connectors according to the invention also benefit from more effective fixing to the supporting wall thanks to a high retention force, with the external locking notch ensuring a more stable hold of the locking member.

The through-wall mounting connector according to the invention may comprise the following additional features, alone or in combination:
- the external locking notch comprises a locking surface adapted to be positioned against said external face;
- the through-wall mounting connector comprises a peripheral rim forming the inner bearing surface, and including a groove for receiving the seal;
- the seal is a closed-contour peripheral seal arranged on the peripheral rim;
- the resilient cantilever arm has a closed shape on the cross-member leg;
- the resilient cantilever arm has two flexible portions on either side of the external locking notch;
- the resilient cantilever arm has a trapezoidal shape, the short side of which is located on the side of the external locking notch and the long side of which is located on the side of the cross-member leg;
- the cross-member leg has reinforcing ribs projecting towards the external locking notch;
- the external locking notch comprises a ramp adapted to cooperate with the support wall;
- the cross-member leg projects substantially perpendicularly from the inner bearing surface;
- the resilient cantilever arm projects substantially perpendicularly from the cross-member leg;
- the external locking notch has a limit heel extending in the direction of the inner bearing surface;
- the limit heel has a stop flange substantially perpendicular to the locking surface;
- the through-wall mounting connector comprises at least two opposite locking members on its periphery.

### BRIEF DESCRIPTION OF THE DRAWINGS

Further features and advantages of the invention will be apparent from the following non-limiting description, with reference to the appended drawings in which :
- Figure 1 is a side view of a through-wall mounting connector according to the invention;
- Figure 2 is a partial cross-section view of the connector;
- Figure 3 is a top view of the connector mounted on through-wall;
- Figure 4 is a partial top view of a connector locking member, when the connector is mounted on through-wall;
- Figure 5 is a partial perspective view of the locking member, when the connector is mounted on through-wall;
- Figure 6 is a partial perspective view of the locking member;
- Figure 7 is a side view of the locking member;
- Figures 8 to 12 illustrate the locking sequences of the locking member.

Elements which are similar and common to the various embodiments bear the same figure reference numbers.

### DETAILED DESCRIPTION

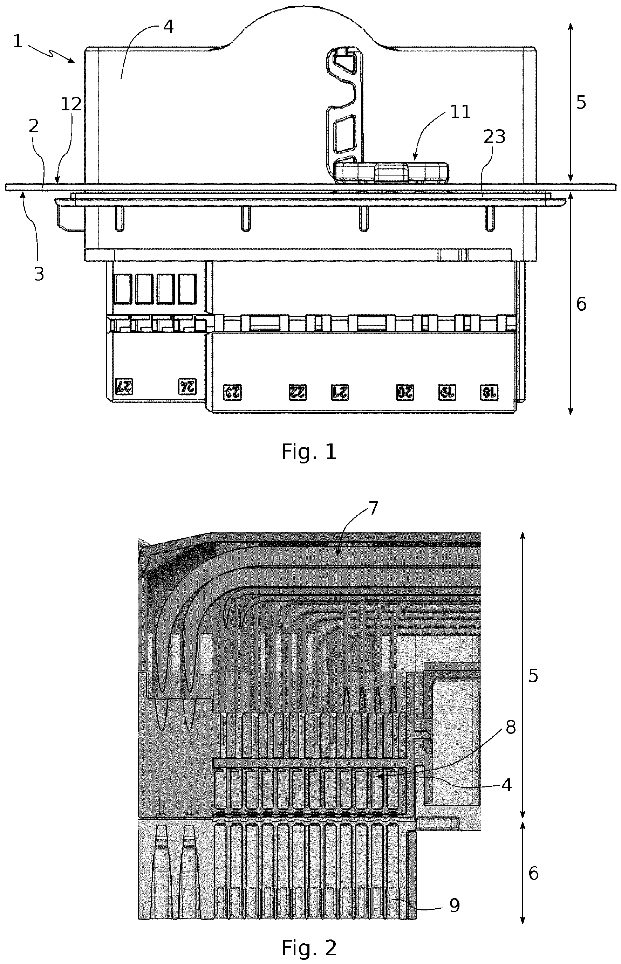

Figure 1 shows a side view of a through-wall mounting connector according to the invention.

This through-wall mounting connector 1 is adapted to be sealingly mounted through a hole in a support wall 2, to protrude from an external face 12 of this support wall 2.

The through-wall mounting connector enables the support wall to be passed through in a sealed manner, and an inner electrical harness to be connected to an external electrical harness.

The through-wall mounting connector 1 has an inner wiring portion 6 (shown as an arrow in Figure 1), and an external portion 5 (also shown as an arrow in Figure 1) which protrudes from and is accessible from outside the volume delimited by the support wall 2. The through-wall mounting connector 1 comprises, at its external portion 5, a connection member 4 which thus forms a connection element rigidly fixed to the support wall 2, and projecting from this support wall 2. In addition, the inner wiring portion 6 includes elements for electrical connection to a circuit (e.g. an electrical harness) provided inside the volume delimited by support wall 2.

Figure 2 is a partial cross-sectional view of connector 1 illustrating an example of the external connection system relating to connector 1. In the cross-section of Figure 2, through-wall mounting connector 1 is connected to an external electrical harness 7.

The through-wall mounting connector 1 is thus adapted to be mounted on a support wall 2 which delimits an inner space (e.g. the inner volume of a vehicle door), so as to make the connection member 4 accessible from outside this inner volume. Connection member 4 can be connected to a wiring harness. The through-wall mounting connector 1 is mounted in a sealed manner on the support wall 2, both to prevent water from infiltrating the connector elements of the through-wall mounting connector 1, and to prevent water from infiltrating the inner volume through the opening in which the through-wall mounting connector 1 is mounted.

In the inner wiring section 6, inner pins 9 can be permanently or disconnectably connected to conductors of an inner wiring harness (not shown).

On the side of the external portion 5, the connector 1 comprises external pins 8 (male or female) which are made available beyond the external face 12 of the support wall 2, in the connection member 4, and are adapted to be connected to an external harness, as the external harness 7 shown in example. In the example of the car door, this external harness is a vehicle harness, intended to be connected to the inner elements of the door, via the through-wall mounting connector 1.

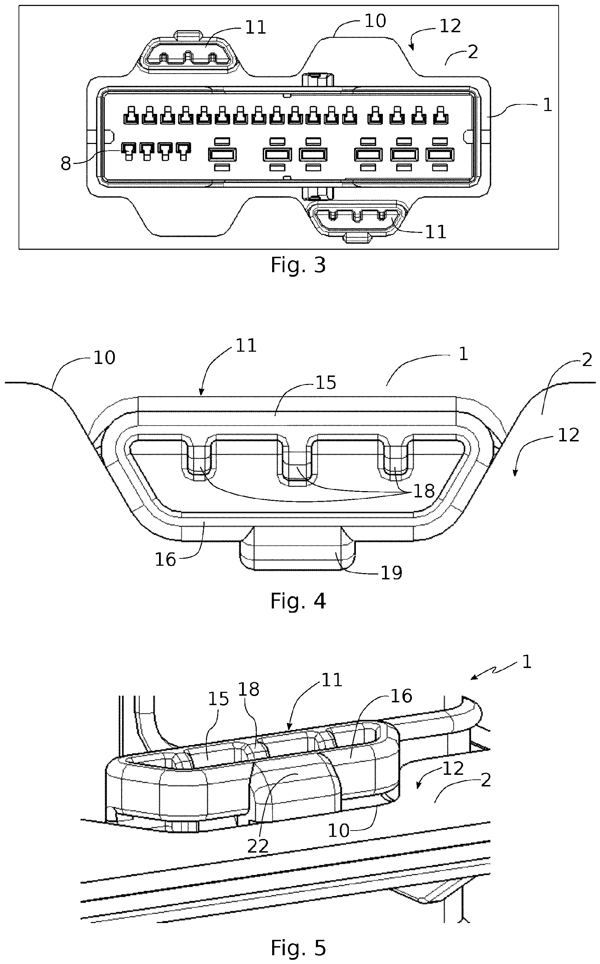

Figure 3 is a bottom view (relative to Figures 1 and 2) showing the through-wall mounting connector 1 as seen from outside the support wall 2.

The support wall 2 has a hole 10, in which the connector 1 is mounted. The outline of the hole 10, according to this example, can be seen in Figure 3, which also shows the inner wiring portion 5 with its inner pins 8.

Figure 3 also shows two opposite locking members 11 on the periphery of the through-wall mounting connector, which enable the connector 1 to be positioned and secured in the hole 10 on the support wall 2.

One of the locking members 11 can also be seen in profile in Figure 1.

Figure 4 is a detail view of figure 3 illustrating the cooperation of one of the locking members 11 with the support wall 2, at the contour of the hole 10.

The through-wall mounting connector 1 has at least one locking member 11. Alternatively, it may have two or more locking members 11, as shown in the illustrated example. In the present description, the description of one locking member 11 is valid for any other possible locking member of the through-wall mounting connector 1.

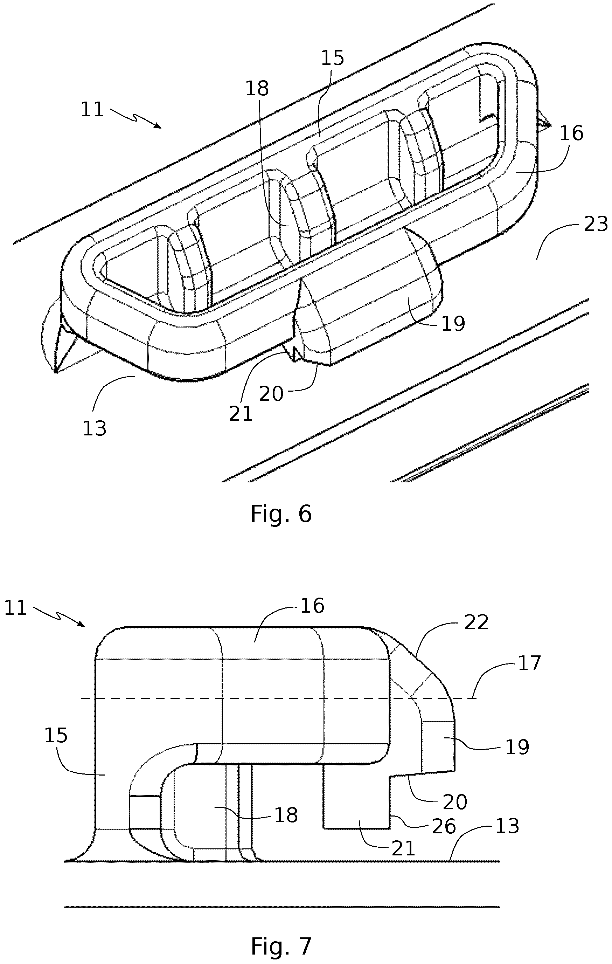

Figure 5 is a perspective view of this locking member 11, in cooperation with the support wall 2. Figure 6 and Figure 7 illustrate, respectively in perspective and from the side, this locking member 11 alone, i.e. when the through-wall mounting connector 1 is not attached to the support wall 2.

The locking member 11 cooperates on the one hand with the inner face 3 of the support wall 2, to ensure the sealing of the assembly, and on the other hand with the external face 12 of the support wall 2, to ensure the locking of the assembly.

The through-wall mounting connector 1 has an inner bearing surface 13, designed in particular to support a seal 14 adapted to cooperate with the inner face 3 of the support wall 2.

The locking member 11 further comprises a cross-member leg 15 which projects transversely from the inner bearing surface 13. In the present example, cross-member leg 15 projects perpendicularly from inner bearing surface 13.

The cross-member leg extends over the entire length of the locking member 11, and advantageously features reinforcing ribs 18.

The locking members 11 also feature a resilient cantilever arm 16 which projects transversely from the cross-member leg 15. In the present example, the resilient cantilever arm 16 projects substantially perpendicularly from the cross-member leg 15. Here, the resilient cantilever arm 16 is in the form of a hoop.

The resilient cantilever arm 16 extends in a plane parallel to the inner bearing surface 13, this plane being represented by the dotted line 17 in Figure 7.

The locking member 11 further comprises an external locking notch 19 which is arranged on the resilient cantilever arm 16, and which is adapted to be positioned against the external face 12 of the support wall 2. This external locking notch 19 is arranged opposite the inner bearing surface 13 of the support wall 2, so that a space is formed between the external locking notch 19 and the inner bearing surface 13, the support wall 2 being received in this space and cooperating with the seal 14.

The external locking notch 19 is movable by means of elastic deformation of the resilient cantilever arm 16, in particular in a direction parallel to the inner bearing surface 13. For this purpose, the resilient cantilever arm 16 has a closed contour which allows movement of the external locking notch 19, enabling a high locking force and guaranteeing the integrity of the locking member 11.

The resilient cantilever arm 16 here has a closed shape on the cross-member leg 15, i.e. it is connected by two of its ends to two regions of the cross-member leg 15. In addition, the contour of the resilient cantilever arm 16 here advantageously has a general trapezoidal shape (see top view in Fig. 4) with the short side of the trapezoid located on the side of the external locking notch 19 and with the long side of the trapezoid located on the side of the cross-member leg 15, which promotes and secures the movement of the external locking notch 19.

The contour of resilient cantilever arm 16 can be also a rectangular or half circled shape. It also can be still trapezoidal, but by having the longer side located on the side of the external locking notch and shorter side on the cross-member leg 15.

The reinforcing ribs 18 of the cross-member 15 project towards the external locking notch 19 for supporting the movement of the external locking notch 19 both in the direction 7 and in a direction perpendicular to this direction 7.

In this example, the external locking notch 19 has a locking surface 20 which is substantially parallel to the inner bearing surface 13 and which is intended to engage against the external face 12 of the support wall 2. The external locking notch 19 also features a limit heel 21 projecting towards the inner bearing surface 13.

As illustrated in Figures 4 and 5, the shape of the resilient cantilever arm 16 and the contour of the hole 10 are complementary, to ensure guidance and positioning of the through-wall connector 1 when mounted on the support wall 2.

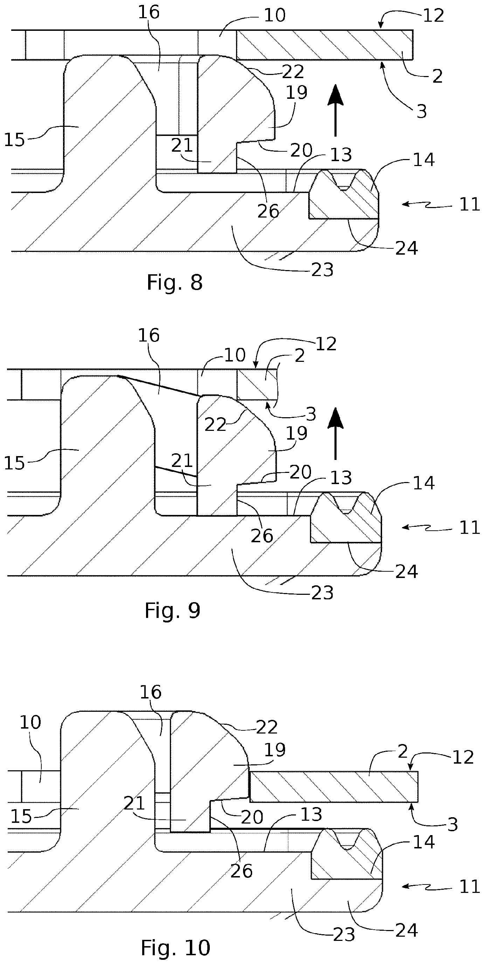

The connector 1 is mounted on the support wall 2 as described below, with reference to Figures 8 to 12.

Figure 8 is a partial cross-sectional view illustrating the operation of inserting the connector 1 into the hole 10 of the support wall 2, seen at the level of a locking member. This figure illustrates the approach of the locking member 11 towards the support wall 2, until the entire resilient cantilever arm 16 comes into contact with the contour of hole 10.

During this movement, the through-wall mounting connector 1 is brought into position relative to the hole 10 in the support wall 2 thanks to the complementary shapes of the resilient cantilever arm 16 and the hole 10.

The external locking notch 19 then comes into contact with a rim of the hole 10 in the support wall 2, as shown in figure 8.

Figure 9 illustrates a function of the limit heel 21 which provides protection against overloading of the external locking notch 19. In the event of such overloading, the resilient cantilever arm 16 bends downwards (as shown in Figure 9), so that the external locking notch 19 is biased towards the inner bearing surface 13, until the limit heel 21 comes into contact with the inner bearing surface 13. The inner bearing surface 13 then acts as an end stop for the movement of the external locking notch 19. In this way, no matter how much force is applied to the resilient cantilever arm 16 and the external locking notch 19, they cannot break.

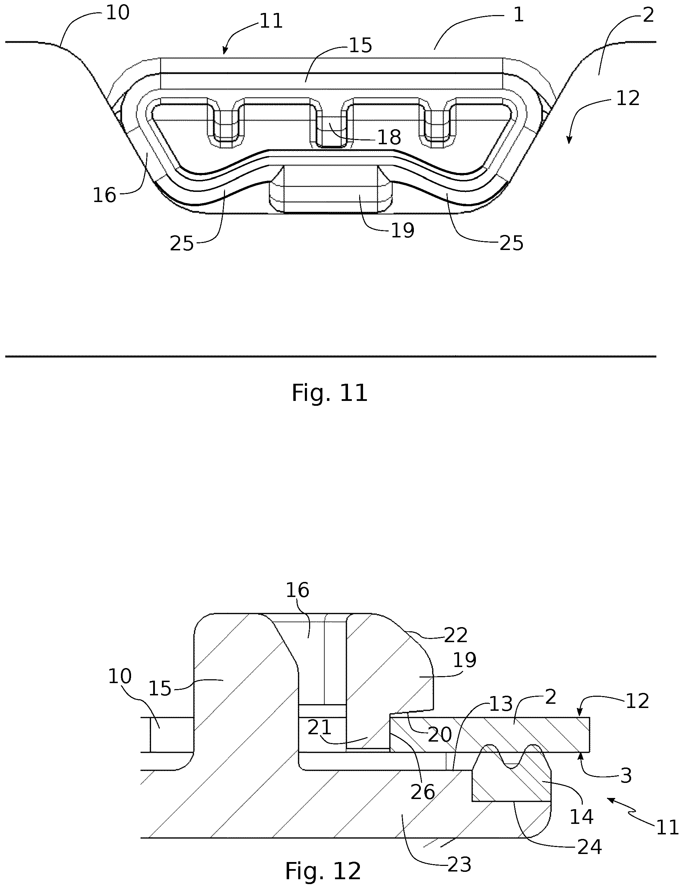

From the position shown in Figure 8 (or Figure 9, in the event of overload), continued engagement of the connector 1 towards the support wall 2 causes the external locking notch 19 to move towards the cross-member leg 15, under the effect of the bending of the resilient cantilever arm 16, as shown in Figure 10, and in the top view of Figure 11.

Figures 10 and 11 illustrate the mobility allowed to the external locking notch 19 by the elastic bending deformation of the resilient cantilever arm 16. This deformation is brought about by a ramp 22 provided on the external locking notch 19. The ramp 22 can be simply formed by a bevelled or rounded surface on the edge of the external locking notch, at the level of its portion in contact with the contour of the orifice 10.

The resilient cantilever arm 16 has two flexible portions 25 on either side of the external locking notch 19, allowing the latter to move relative to the cross-member leg 15.

Further engagement of the connector 1 on the support wall 2 leads to the final position shown in Fig. 12 (and Figs. 4 and 5), in which the through-wall mounting connector 1 is locked on the support wall 2, thanks to the external locking notch 19, whose locking surface 20 is positioned against the external face 12 of the support wall 2. On the other side of the support wall 2, the seal 14 is positioned against the inner face 3 of the support wall 2. The result is an elastic, watertight seal.

The limit heel 21 has a stop flange 26 substantially perpendicular to the locking surface 20, which is used to wedge the edge of the support wall 2. This stop flange 26 is giving in addition the advantage of an audible "click" when reaching his final position.

When the through-wall mounting connector 1 has several locking members 11 (in the illustrated example, it has two), the inner bearing surfaces of the various locking members can be formed on a single peripheral rim 23 running around the locking connector.

The through-wall mounting connector 1 can also have only one locking member 11, with an opposite rigid locking nose; that means the connector 1 will be mounted not straight but by side, with the rigid nose locked at first, and the locking member 11 swinged in.

This peripheral rim 23 can include a groove for receiving the seal 24, which is then a peripheral seal surrounding the through-wall mounting connector 1, following a contour close to the contour of the orifice 10. The seal 24 is then a closed-contour peripheral seal arranged on the peripheral rim 23.

The through-wall mounting connector 1 thus features particularly compact locking means, enabling the use of a simple, low-profile peripheral seal, without the need for costly, cumbersome overmolding.

## Claims

1. Through-wall mounting connector (1) adapted to be sealingly mounted through an opening in a support wall (2) against an inner face (3) of said support wall (2), this through-wall mounting connector (1) comprising an inner wiring portion (6) and an external portion (5) which is intended to project from an external face (12) of the said support wall (2) and which is provided with a connection member (4), this through-wall mounting connector (1) being **characterized in that** it comprises a locking member (11) which includes :
- an inner bearing surface (13) supporting a seal (14) adapted to be positioned against said inner face (3) of the support wall (2);
- a cross-member leg (15) projecting transversely from the inner bearing surface (13) towards the external portion (5);
- a resilient cantilever arm (16) projecting transversely from the cross-member leg (15), and extending in a plane (17) parallel to the inner bearing surface (13);
- an external locking notch (19) arranged on the resilient cantilever arm (16) and adapted to be positioned against said external face (12) of the support wall (2), this external locking notch (19) being arranged opposite the inner bearing surface (13), and being movable by means of elastic deformation of the resilient cantilever arm (16), in a direction substantially parallel to the inner bearing surface (13).

2. Through-wall mounting connector according to claim 1, **characterized in that** the external locking notch (19) comprises a locking surface (20) adapted to be positioned against said external face (12).

3. Through-wall mounting connector according to any of claims 1 or 2, **characterized in that** it comprises a peripheral rim (23) forming the inner bearing surface (13), and including a groove (24) for receiving the seal (14).

4. Through-wall mounting connector according to claim 3, **characterized in that** the seal (14) is a closed-contour peripheral seal arranged on the peripheral rim (23).

5. Through-wall mounting connector according to any of the preceding claims, **characterized in that** the resilient cantilever arm (16) has a closed shape on the cross-member leg (15).

6. Through-wall mounting connector according to claim 5, **characterized in that** the resilient cantilever arm (16) has two flexible portions (25) on either side of the external locking notch (19).

7. Through-wall mounting connector according to any of claims 5 or 6, **characterized in that** the resilient cantilever arm (16) has a trapezoidal shape, the short side of which is located on the side of the external locking notch (19) and the long side of which is located on the side of the cross-member leg (15).

8. Through-wall mounting connector according to any of the preceding claims, **characterized in that** the cross-member leg (15) has reinforcing ribs (18) projecting towards the external locking notch (19).

9. Through-wall mounting connector according to any of the preceding claims, **characterized in that** the external locking notch (19) comprises a ramp (22) adapted to cooperate with the support wall (2).

10. Through-wall mounting connector according to any of the preceding claims, **characterized in that** the cross-member leg (15) projects substantially perpendicularly from the inner bearing surface (13).

11. Through-wall mounting connector according to any of the preceding claims, **characterized in that** the resilient cantilever arm (16) projects substantially perpendicularly from the cross-member leg (15).

12. Through-wall mounting connector according to any of the preceding claims, **characterized in that** the external locking notch (19) has a limit heel (21) extending in the direction of the inner bearing surface (13).

13. Through-wall mounting connector according to claim 12 when it depends from claim 2, **characterized in that** the limit heel (21) has a stop flange (26) substantially perpendicular to the locking surface (20).

14. Through-wall mounting connector according to any of the preceding claims, **characterized in that** it comprises at least two opposite locking members (11) on its periphery.
